# EUROPEAN PATENT APPLICATION

(11) **EP 1 219 653 A1**
(43) Date of publication of application: **03.07.2002**
(21) Application number: 00830862.9
(22) Date of filing: 29.12.2000
(51) Int. Cl.: C08G 18/09, C08G 18/40, C08G 18/42, C08J 9/14

(54) **Rigid polyurethane or urethane-modified polyisocyanurate foams and processes for their preparation**

(71) Applicant: HUNTSMAN INTERNATIONAL LLC, Salt Lake City, Utah 84108 (US)
(72) Inventor: Javarone, Cristina, 21023 Besozzo (Varese) (IT); Martignoni, Andrea, 21040 Castronno (Varese) (IT)
(74) Representative: Appoloni, Romano

(57) **Abstract**

Process for making rigid polyurethane or urethane-modified polyisocyanurate foams at an isocyanate index of between 100 and 400 comprising the step of reacting an organic polyisocyanate composition with an isocyanate-reactive composition comprising a polyester polyol in the presence of a hydrocarbon as blowing agent and no water or low amounts of water (less than 0.5 wt% on isocyanate-reactive composition), wherein the polyester polyol forms an unstable emulsion with the hydrocarbon.

## Description

This invention relates to rigid polyurethane or urethane-modified polyisocyanurate foams and to processes for their preparation.

Rigid polyurethane and urethane-modified polyisocyanurate foams are in general prepared by reacting a stoichiometric excess of polyisocyanate with isocyanate-reactive compounds in the presence of blowing agents, surfactants and catalysts. One use of such foams is as a thermal insulation medium in, for example, buildings.

Polyether polyols or polyester polyols are generally used as isocyanate-reactive compounds.

Polyester polyols impart excellent flame retardancy characteristics to the resulting polyurethane foams and can in some cases even be less expensive than polyether polyols.

One of the most important characteristics of rigid polyurethane foam are the thermal insulation properties, i.e. the lambda value, which has to be as low as possible, especially at 10°C, when the foam is used as insulation in appliances. This low lambda value should also be reached with the nowadays used physical blowing agents, especially the hydrocarbon ones (e.g. cyclopentane).

Therefore it is an object of the present invention to provide a process for making rigid polyurethane foams based on polyester polyols showing a low lambda value, especially at 10°C, and also that can make use of notably cyclopentane.

According to the present invention a process for making rigid polyurethane or urethane-modified polyisocyanurate foams is provided by reacting an organic polyisocyanate composition with an isocyanate-reactive composition comprising a polyester polyol in the presence of an hydrocarbon as a blowing agent, wherein the polyester polyol forms an unstable emulsion with the hydrocarbon.

It has been found that this type of polyester polyol surprisingly provides very low lambda values, especially very low lambda values at 10°C. Typically, the foams thus obtained will show an initial lambda value, measured at 10°C, below 20mW/m K, preferably below 18mW/m K.

The term "polyester polyol" as used herein is meant to include any polyester polyol having a hydroxyl functionality of at least two wherein the majority of the recurring units contain ester linkages and the molecular weight is at least 300.
The polyester polyols for use in the present invention advantageously have an average functionality of about 1.8 to 8, preferably about 2 to 6 and more preferably about 2 to 3. Their hydroxyl number values generally fall within a range of about 15 to 750, preferably about 30 to 550 and more preferably about 180 to 550 mg KOH/g. The molecular weight of the polyester polyol generally falls within the range of about 200 to about 10000, preferably about 300 to about 2000. Preferably the polyester polyols have an acid number between 0.1 and 20 mg KOH/g; in general the acid number can be as high as 30 mg KOH/g.

The polyester polyols of the present invention can be prepared by known procedures from a polycarboxylic acid or acid derivative, such as an anhydride or ester of the polycarboxylic acid, and any polyhydric alcohol. The polyacid and/or polyol components may be used as mixtures of two or more compounds in the preparation of the polyester polyols.

The polyols can be aliphatic, cycloaliphatic, aromatic and/or heterocyclic. Low molecular weight aliphatic polyhydric alcohols, such as aliphatic dihydric alcohols having no more than about 20 carbon atoms are highly satisfactory. The polyols optionally may include substituents which are inert in the reaction, for example, chlorine and bromine substituents, and/or may be unsaturated. Suitable amino alcohols, such as, for example, monoethanolamine, diethanolamine, triethanolamine, or the like may also be used. A preferred polyol component is a glycol. The glycols may contain heteroatoms (e.g., thiodiglycol) or may be composed solely of carbon, hydrogen and oxygen. They are advantageously simple glycols of the general formula CₙH₂ₙ(OH)₂ or polyglycols distinguished by intervening ether linkages in the hydrocarbon chain, as represented by the general formula CₙH₂ₙOₓ(OH)₂. Examples of suitable polyhydric alcohols include: ethylene glycol, propylene glycol -(1,2) and -(1,3), butylene glycol -(1,4) and -(2,3), hexanediol -(1,6), octanediol -(1,8), neopentyl glycol, 1,4-bishydroxymethyl cyclohexane, 2-methyl-1,3-propane diol, glycerin, trimethylolethane, hexanetriol -(1,2,6), butanetriol -(1,2,4), quinol, methyl glucoside, triethyleneglycol, tetraethylene glycol and higher polyethylene glycols, dipropylene glycol and higher polypropylene glycols, diethylene glycol, glycerol, pentaerythritol, trimethylolpropane, sorbitol, mannitol, dibutylene glycol and higher polybutylene glycols. Especially suitable polyols are alkylene glycols and oxyalkylene glycols, such as ethylene glycol, diethylene glycol, dipropylene glycol, triethylene glycol, tripropylene glycol, tetraethylene glycol, tetrapropylene glycol, trimethylene glycol, tetramethylene glycol and 1,4-cyclohexanedimethanol (1,4-bis-hydroxymethylcyclohexane).

The polycarboxylic acid component may be aliphatic, cycloaliphatic, aromatic and/or heterocyclic and may optionally be substituted, for example, by halogen atoms and/or may be unsaturated. Examples of suitable carboxylic acids and derivatives thereof for the preparation of the polyester polyols include: oxalic acid, malonic acid, adipic acid, glutaric acid, succinic acid, pimelic acid, suberic acid, azelaic acid, sebacic acid, phthalic acid, phthalic acid anhydride, terephthalic anhydride, isophthalic acid, terephthalic acid, trimellitic acid, tetrahydrophthalic acid anhydride, pyromellitic dianhydride, hexahydrophthalic acid anhydride, tetrachlorophthalic acid anhydride, endomethylene tetrahydrophthalic anhydride, glutaric acid anhydride, maleic acid, maleic acid anhydride, terephthalic acid dimethylester, terephthalic acid-bis glycol ester, fumaric acid, dibasic and tribasic unsaturated fatty acids optionally mixed with monobasic unsaturated fatty acids, such as oleic acids. Phthalic acid anhydride and terephthalic acid anhydride are the preferred initiators.

While the polyester polyols can be prepared from substantially pure reactant materials, more complex ingredients can be used, such as the side-stream, waste or scrap residues from the manufacture of phthalic acid, terephthalic acid, dimethyl terephthalate, polyethylene terephthalate, and the like. These compositions can be converted by reaction with polyols to polyester polyols through conventional transesterification or esterification procedures.

The production of the polyester polyols is accomplished by simply reacting the polycarboxylic acid or acid derivative with the polyol component in a known manner until the hydroxyl and acid values of the reaction mixture fall in the desired range. After transesterification or esterification the reaction product can optionally be reacted with an alkylene oxide.

The term "polyester polyol" as used herein includes any minor amounts of unreacted polyol remaining after the preparation of the polyester polyol and/or unesterified polyol (e.g., glycol) added after the preparation. The polyester polyol can advantageously include up to about 40 % by weight free glycol. Preferably the free glycol content is from 2 to 30, more preferably from 2 to 15 % by weight of the total polyester polyol component.

Aliphatic and/or aromatic polyester polyols can be used according to the present invention. Mixtures of two or more different polyester polyols may be used.

The polyester polyol used in the invention makes an unstable emulsion with the hydrocarbon blowing agent with which it is mixed. By "unstable", is meant an emulsion that will break down into less than 2 hours, preferably less than 15 minutes. The stability of the emulsion is determined by first stirring 100 g of polyester polyol with 15 pbw of hydrocarbon at 20°C and then checking the time its needs for the layers to separate.

The polyester polyol used in the invention can be easily selected from the polyester polyols available on the market or those that can be prepared in know manners, or those that will become available. The test to determine the stability of the emulsion is easy to carry out, and the suitability of the polyol is hence easily determined.
Preferred commercially available polyester polyols for use in the present invention include Isoexter 3061 available from Coim, Terate 2540 available from Kosa and Stepanpol 3152 available from Stepan.

According to a preferred embodiment of the present invention, the isocyanate-reactive composition is first mixed with the hydrocarbon blowing agent and then the reaction with the polyisocyanate takes place.

According to the present invention the polyester polyols described above can constitute the totality of the reactive mixture reacted with the polyisocyanate; it is understood, however, that these polyols could also be used mixed with other isocyanate-reactive compounds conventionally used in the art. The amount thereof is preferably at most 40%, preferably at most 30%, based on the total weight of the isocyanate-reactive composition, so that the polyester polyol remains the major component.

The isocyanate-reactive compounds which can be employed in combination with the polyester polyols in the preparation of the rigid polyurethane foams of the present invention include any of those known in the art for that purpose, such as polyether polyols. Of particular importance for the preparation of rigid foams are polyols and polyol mixtures having average hydroxyl numbers of from 300 to 1000, especially from 300 to 700 mg KOH/g, and hydroxyl functionalities of from 2 to 8, especially from 3 to 8. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine, diaminodiphenylmethane and polymethylene polyphenylene polyamines; and aminoalcohols, for example ethanolamine and diethanolamine; and mixtures of such initiators. Further suitable polymeric polyols include hydroxyl-terminated polythioethers, polyamides, polyesteramides, polycarbonates, polyacetals, polyolefins and polysiloxanes.

The blowing agent used in the instant invention comprises a hydrocarbon, such as C4 to C6 (cyclo)alkane. Examples of preferred blowing agents include isobutane, n-pentane, isopentane, cyclopentane or mixtures thereof. The preferred blowing agent is cyclopentane (used alone or in a mixture with isopentane in a ratio cyclopentane/isopentane from 60:40 to 100:0).

Any of the blowing agents known in the art for the preparation of rigid polyurethane or urethane-modified polyisocyanurate foams can be used in the process of the present invention in combination with the hydrocarbon. Such blowing agents include water or other carbon dioxide-evolving compounds, or inert low boiling compounds having a boiling point of above -70°C at atmospheric pressure.

Where water is used as blowing agent, the amount may be selected in known manner to provide foams of the desired density, typical amounts being in the range from 0.05 to 5 % by weight based on the total reaction system. Preferably however, water will not be used in the present invention or only used in amounts of less than 0.5 wt% on the total isocyanate-reactive composition.

Suitable other inert blowing agents include those well known and described in the art, for example, dialkyl ethers, alkyl alkanoates, aliphatic and cycloaliphatic hydrofluorocarbons, hydrochlorofluorocarbons, chlorofluorocarbons, hydrochlorocarbons and fluorine-containing ethers. Examples are 1,1-dichloro-2-fluoroethane (HCFC 141b), 1,1,1-trifluoro-2-fluoroethane (HFC 134a), chlorodifluoro-methane (HCFC 22), 1,1-difluoro-3,3,3-trifluoropropane (HFC 245fa), as well as those described in PCT Patent Publication No. 96/12758, incorporated herein by reference (in addition to the (cyclo)alkane). Preferably however, no other inert blowing agent will be used in the present invention.

The blowing agents are employed in an amount sufficient to give the resultant foam the desired bulk density which is generally in the range 15 to 70 kg/m³, preferably 20 to 50 kg/m³, most preferably 25 to 40 kg/m³. Typical amounts of blowing agents are in the range 2 to 25 % by weight based on the total reaction system.

When a blowing agent has a boiling point at or below ambient it is maintained under pressure until mixed with the other components. Alternatively, it can be maintained at subambient temperatures until mixed with the other components.

Suitable organic polyisocyanates to be reacted with the isocyanate-reactive composition to form rigid polyurethane or urethane-modified polyisocyanurate foams include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane. Further suitable polyisocyanates for use in the process of the present invention are those described in EP-A-0320134.
Modified polyisocyanates, such as carbodiimide or uretonimine modified polyisocyanates can also be employed.
Still other useful organic polyisocyanates are isocyanate-terminated prepolymers prepared by reacting excess organic polyisocyanate with a minor amount of an active hydrogen-containing compound.
Preferred polyisocyanates to be used in the present invention are the polymeric MDI's.

The quantities of the polyisocyanate composition and the polyfunctional isocyanate-reactive composition to be reacted can be readily determined by the man skilled in the art. In general the isocyanate index falls within the range 85 to 500, preferably about 100 to 400, most preferably between 200 and 350.

In addition to the polyisocyanate and polyfunctional isocyanate-reactive compositions and the blowing agent, the foam-forming reaction mixture will commonly contain one or more other auxiliaries or additives conventional to formulations for the production of rigid polyurethane and urethane-modified polyisocyanurate foams. Such optional additives include crosslinking agents, for examples low molecular weight polyols such as triethanolamine, processing aids, viscosity reducers, dispersing agents, plasticizers, mold release agents, antioxidants, fillers (e.g. carbon black), cell size regulators such as insoluble fluorinated compounds (as described, for example, in US 4981879, US 5034424, US 4972002, EP 0508649, EP 0498628, WO 95/18176), foam-stabilising agents or surfactants, for example siloxane-oxyalkylene copolymers (such as polydimethylsiloxane-polyoxyalkylene block copolymers), urethane catalysts such as non-amine polyurethane catalysts such as tin compounds (e.g. stannous salts of carboxylic acids such as stannous octoate or dibutyltin dilaurate), trimerisation catalysts (e.g. alkali metal carboxylic acid salts), tertiary amines such as dimethylcyclohexylamine or triethylene diamine, fire retardants, for example halogenated alkyl phosphates such as tris chloropropyl phosphate, triethylphosphate, diethylethylphosphonate and dimethylmethylphosphonate.
The use of such additives is well known to those skilled in the art.

In operating the process for making rigid foams according to the invention, the known one-shot, prepolymer or semi-prepolymer techniques may be used together with conventional mixing methods and the rigid foam may be produced in the form of slabstock, mouldings, cavity fillings, sprayed foam, frothed foam or laminates with other materials such as hardboard, plasterboard, plastics, paper or metal.

It is convenient in many applications to provide the components for polyurethane production in pre-blended formulations based on each of the primary polyisocyanate and isocyanate-reactive components. In particular, many reaction systems employ a polyisocyanate-reactive composition which contains the major additives such as the catalyst and the blowing agent in addition to the polyisocyanate-reactive component or components.

The various aspects of this invention are illustrated, but not limited by the following examples in which the following ingredients are used:
Polyol A: a dimethyl terephthalate (DMT)-initiated polyester polyol of OH value 240 mg KOH/g. This polyol is available under the trademark Terate 2540 from Kosa.
Polyol B: a phthalic anhydride-initiated polyester polyol of OH value 235 mg KOH/g. This polyol is available under the trademark Stepanpol PS2352 from Stepan.
Polyol C: a phthalic anhydride-initiated polyester polyol of OH value 300 mg KOH/g. This polyol is available under the trademark Isoexter 3061 from Coim.
Polyol D: a phthalic anhydride-initiated polyester polyol of OH value 240 mg KOH/g. This polyol is available under the trademark Stepanpol PS2412 from Stepan.
Polyol E: an aromatic amine initiated polyether polyol of OH value 500 KOH/g.
L6900: a silicone surfactant available from OSi Specialties.
Catalyst: a catalyst package containing tertiary amines and trimerisation catalysts.
TCPP: a phosphorous based flame retardant (tris chloropropyl phosphate).
SUPRASEC 2085: polymeric MDI available from Huntsman Polyurethanes (SUPRASEC is a trademark of Huntsman ICI Chemicals LLC).

### EXAMPLE

Rigid polyurethane foams were made from a polyol composition and a polyisocyanate composition containing the ingredients listed below in Table 1. The cyclopentane-polyol mixture is high-sheared for 30 sec. with a Silverson® high shear mixer just before the polyol blend and the isocyanate are mixed together. The isocyanate and the polyol blends are mixed at 3000rpm for 6 sec. Then, the foam mixture is poured in a wooden open top mould (20x20x30cm). Oriented free rise foam is obtained. The lambda blocks (typically 20x20x3cm) are cut vertically (cells oriented perpendicular to the heat transfer direction).

The lambda measurements at 10°C are carried out under default conditions with a 20°C difference between cold and hot plates according to standard ISO 8301 or ISO 2581.

The cyclopentane solubility has been measured according to the following procedure. In a glass bottle, 100 g of polyol is weighed and gradually small amounts of cyclopentane are added. The solubility is exceeded when the polyol becomes trouble or a separation occurs. The results are given as "soluble", "stable emulsion" or "unstable emulsion".

The following table summarizes the compositions and results. Amounts are given in parts by weight.

**Table 1**

| Formulations | 1 | 2 | 3 | 4 | 5 | 6 |
|---|---|---|---|---|---|---|
| Polyol A | 100 | - | - | - | - | 70 |
| Polyol B | - | 100 | - | - | - | - |
| Polyol C | - | - | 100 | - | 70 | - |
| Polyol D | - | - | - | 100 | - | - |
| Polyol E | - | - | - | - | 30 | 30 |
| L6900 | 2 | 2 | 2 | 2 | 2 | 2 |
| Catalyst | 1.9 | 1.9 | 2.8 | 2.6 | 2.7 | 2.3 |
| TCPP | 10 | 10 | 10 | 10 | 15 | 15 |
| Cyclopentane | 19 | 17.5 | 19 | 17.5 | 24.5 | 25 |
| Suprasec 2085 | 166 | 151.9 | 194.9 | 151.9 | 225 | 216.5 |
| Isocyanate Index (in %) | 250 | 250 | 250 | 250 | 250 | 250 |
| Cyclopentane solubility | unstable emulsion | soluble | unstable emulsion | stable emulsion | unstable emulsion | unstable emulsion |
| Lambda value (in mW/mK) | 17.2 | 19.5 | 17.3 | 20 | 17.4 | 17.7 |

The Isoexter 3061 and Terate 2540 are the preferred polyester polyols to be used in the invention, as sole polyols or in blends with polyether polyols.

## Claims

1. Process for making rigid polyurethane or urethane-modified polyisocyanurate foams comprising the step of reacting an organic polyisocyanate composition with an isocyanate-reactive composition comprising a polyester polyol in the presence of a hydrocarbon as a blowing agent, wherein the polyester polyol forms an unstable emulsion with the hydrocarbon.

2. Process according to claim 1 wherein said hydrocarbon is cyclopentane.

3. Process according to claim 1 or 2 wherein the polyester polyol is a phthalic anhydride-initiated polyester polyol or a terephthalic anhydride-initiated polyester polyol.

4. Process according to any one of the preceding claims wherein no water is used as a blowing agent.

5. Process according to any one of the preceding claims wherein water is used in an amount of less than 0.5 wt% on total isocyanate-reactive composition.

6. Process according to any one of the preceding claims wherein the hydrocarbon blowing agent is first mixed with the isocyanate-reactive composition and then the reaction with the organic polyisocyanate composition takes place.

7. Process according to any one of the preceding claims wherein the isocyanate index is from 100 to 400 %.

8. Process according to any one of the preceding claims wherein said foam has an initial lambda value, measured at 10°C, below 20mW/m K, preferably below 18mW/m K.

9. Process according any one of the preceding claims wherein the amount of hydrocarbon blowing agent is from 2 to 15%, based on the total weight of the foam components.

10. Process according to any one of the preceding claims wherein the polyester polyol has an average functionality of 1.8 to 3, a hydroxyl number of 180 to 550 mg KOH/g and a molecular weight of 300 to 2000.

11. Process according to any one of the preceding claims wherein the isocyanate-reactive composition further comprises a polyether polyol.

12. Rigid polyurethane or urethane-modified polyisocyanurate foams obtainable by the process as defined in any one of the preceding claims.
